# EUROPÄISCHE PATENTSCHRIFT

(11) **EP 3 149 384 B1**
(45) Veröffentlichungstag und Bekanntmachung des Hinweises auf die Patenterteilung: **05.10.2022**
(21) Anmeldenummer: 15741903.7
(22) Anmeldetag: 01.04.2015
(51) Int. Cl.: F16L 37/098

(54) **STECKVERBINDER FÜR FLUIDLEITUNGEN MIT INNENLIEGENDER ADAPTERHÜLSE**
PLUG-IN CONNECTOR FOR FLUID LINES WITH INNER ADAPTER SLEEVE
RACCORD ENFICHABLE POUR CONDUITES DE FLUIDE, MUNI D'UNE DOUILLE D'ADAPTATION INTÉRIEURE

(30) Priorität: 30.05.2014 DE 102014107655
(43) Veröffentlichungstag der Anmeldung: 05.04.2017
(73) Patentinhaber: Voss Automotive GmbH, 51688 Wipperfürth (DE)
(72) Erfinder: KLEIN, Roland, 51688 Wipperfürth (DE); HEINRICHS, Eugen, 51645 Gummersbach (DE)
(74) Vertreter: Dr. Solf & Zapf Patent- und Rechtsanwalts PartG mbB
(86) Internationale Anmeldenummer: PCT/EP2015/057243
(87) Internationale Veröffentlichungsnummer: WO 2015/180875

(56) Entgegenhaltungen:
- EP-A2- 2 728 236
- DE-A1-102005 060 135
- DE-C1- 10 115 399

## Beschreibung

Die vorliegende Erfindung betrifft einen Steckverbinder gemäß dem Oberbegriff des Anspruchs 1 zur Verwendung für eine Steckkupplung. Weiterhin betrifft die Erfindung eine Steckkupplung gemäß dem Oberbegriff des Anspruchs 2, bestehend aus einem Gegensteckverbinder und einem Steckverbinder.

Ein Steckverbinder der eingangs genannten Art ist aus der DE 10 2005 060 135 A1 bekannt. Ein weiterer Steckverbinder geeignet für eine Steckkupplung ist aus der DE 10 2008 013 565 A1 bekannt. Hierbei hintergreifen die Rastarme mit ihren Rastnocken einen Ringkragen eines eingesteckten Gegensteckverbinders. Die Rastarme weisen deshalb jeweils einen radial nach außen gerichteten Stufenabschnitt auf, an dessen freien Ende der jeweilige Rastnocken angeformt ist. Hierdurch ergibt sich eine Durchmesservergrößerung des Steckverbinders, so dass der erforderliche Einbauraum entsprechend vergrößert sein muss. Zudem ist es erforderlich, um die Baulänge des Steckverbinders möglichst klein zu halten, dass im Muffenabschnitt axial verlaufende Öffnungsbereiche für die Aufnahme des im Durchmesser vergrößerten Stufenabschnitts vorhanden sind, wodurch im nicht gesteckten Zustand der Adapterhülse das Eindringen von Schmutzpartikeln in den Muffenabschnitt begünstigt wird. Weiterhin besteht die Gefahr, dass im gesteckten Zustand des Gegensteckverbinders ein ungewolltes Lösen desselben erfolgen kann, da die über den Umfang des Muffenabschnitts vorstehenden Betätigungsabschnitte leicht zugänglich sind.

Aus der DE 10 2011 084 988 ist ein Steckverbinder bekannt, bei dem die Formschlussmittel am freien Ende der Rastarme an deren Außenseite ausgebildet sind. Die Rastnocken sind ebenfalls an diesen Rastarmen an deren Unterseite angeordnet, wobei sich die Rastnocken innerhalb des Muffenabschnitts befinden. Diese Anordnung und Ausbildung der Formschlusselemente und der Rastnocken bedingen einerseits eine relativ lange Bauweise des Muffenabschnitts, und darüber hinaus befindet sich in der Wandung des Muffenabschnitts ein relativ großer Ausschnitt, so dass die Rastarme ungeschützt sind, und darüber hinaus auch Schmutz leicht in den Muffenabschnitt eindringen kann.

Die DE 101 15 399 C1 offenbart eine Steckkupplung mit einer Adapterhülse mit Rastmitteln, die über radial zur Steckachse verlaufende Federstege federnd gelagert sind und über Betätigungsabschnitte betätigt werden. Die Betätigungsabschnitte sind in Öffnungen des Muffenabschnitts des Steckverbinders aufgenommen, wobei zur Aufnahme der Adapterhülse der Muffenabschnitt des Steckverbinders radial vergrößert ist. Um zu gewährleisten, dass ein Gegensteckverbinder sicher in dem Steckverbinder gehalten ist, ist zusätzlich ein Verriegelungselement vorgesehen, welches mit Seitenwänden auf den Steckverbinder aufrastbar ist und die Betätigungsabschnitte im aufgerasteten Zustand übergreift.

Die DE 10 2005 060 135 A1 offenbart eine Steckkupplung, bei der der Gegensteckverbinder im eingesteckten Zustand unlösbar, oder nur bei unsachgemäßer Einwirkung lösbar, mit dem Steckverbinder verbunden ist: Die Rastnocken, welche einen Rückhaltering des Gegensteckverbinders übergreifen, sind im eingesteckten Zustand des Gegensteckverbinders in dem Muffenabschnitt des Steckverbinders eingekammert und von außen nicht zugänglich. Die Blockierstücke halten die Adapterhülse unlösbar in dem Steckverbinder, wenn der Gegensteckverbinder eingesteckt ist, da der Rückhaltering die Blockierstücke in die Fenster des Steckverbinders drückt.

Der vorliegenden Erfindung liegt die Aufgabe zu Grunde, ausgehend von einer gattungsgemäßen Steckkupplung, deren Nachteile zu vermeiden und einen in seinen Abmessungen sehr kompakten Steckverbinder zu schaffen, der bei beengten Einbauverhältnissen die volle Elastizität und eine einwandfreie Funktion der Rastmittel gewährleistet und eine geschützte Anordnung der Rastarme ermöglicht. Gleichzeitig soll eine wirkungsvolle Sicherung der Raststellung der Rastarme möglich sein.

Erfindungsgemäß wird dies durch die Merkmale des kennzeichnenden Teils des Anspruchs 1 erreicht. Dabei weist der Gegensteckverbinder eine im Bereich eines Steckerschaftes ausgebildete Rastnut auf, in die die Rastnocken der Rastarme im eingesteckten Zustand des Gegensteckverbinders eingreifen können. Hierdurch ist es erfindungsgemäß möglich, die Adapterhülse im Bereich ihres Ringkragens durchmessermäßig derart zu beschränken, dass der Außendurchmesser des Ringkragens nicht größer ist als der Außendurchmesser des Muffenabschnitts des Gehäuses. Hierdurch werden auch bei sehr beengten Raumverhältnissen eine Beeinträchtigung der elastischen Rastarme und eine Beschädigung derselben vermieden. Erfindungsgemäß sitzt die Adapterhülse im Wesentlichen umfangsgemäß geschützt in dem Gehäuse, und die Rastmittel sind nicht Bestandteil des Gehäuses, sondern die Rastmittel sind an dem separaten Teil der Adapterhülse ausgebildet, die in das Gehäuse eingesetzt wird. Somit ist es möglich, dass die Adapterhülse und das Gehäuse aus unterschiedlichen Materialien gefertigt werden können. Die erfindungsgemäßen Formschlusselemente ermöglichen sowohl eine axiale Fixierung, insbesondere eine umfangsgemäße Fixierung, da sie auch in Umfangsrichtung in der Adapterhülse zweckmäßigerweise formschlüssig fixiert sind. Durch den Formschluss in axialer Richtung kann die Adapterhülse durch Zugbeanspruchung nicht gelöst werden, und durch den erfindungsgemäßen Formschluss in Umfangsrichtung wird auch eine Verdrehung der Adapterhülse vermieden.

Erfindungsgemäß kann es von Vorteil sein, wenn die Adapterhülse einen am Umfang ihrer Durchgangsöffnung an ihrem in Einsteckrichtung gesehen hinteren Öffnungsrand verlaufenden Ringkragen aufweist, der im eingesteckten Zustand der Adapterhülse außerhalb des Muffenabschnitts angeordnet ist, wobei auch die Rastnocken ebenfalls außerhalb des Muffenabschnitts verlaufen. Erfindungsgemäß ist es von Vorteil, wenn um 180° zueinander versetzte Rastarme an der Adapterhülse vorgesehen sind. Vorteilhafterweise ist der Ringkragen kreisförmig ausgebildet und sein Außendurchmesser ist gleich groß wie ein Außendurchmesser einer kreisförmigen Umfangskontur des Muffenabschnitts des Gehäuses. Somit überragt der Ringkragen nicht die Außenkontur des Muffenabschnitts, wodurch sich eine sehr kompakte Bauform ergibt.

Zweckmäßigerweise ist der Ringkragen im Bereich der Rastnocken mit den Rastarmen verbunden und im Übrigen Umfangsbereich durch umfangsgemäße Spaltabschnitte von dem Gehäuse der Adapterhülse getrennt. Es ist erfindungsgemäß von Vorteil, wenn der Ringkragen mittig zwischen den Rastarmen Verformungsabschnitte aufweist, die unter einer radial zur Längsmittelachse gerichteten Kraft derart verformbar sind, dass eine radial nach außen gerichtete Spreizung der Rastarme derart erzeugt wird, dass der radiale Abstand der Rastnocken gleich dem Innendurchmesser der Durchgangsöffnung ist. Die erfindungsgemäße Ausbildung des Ringkragens ermöglicht eine Lösbarkeit des eingesteckten Gegensteckverbinders von Hand.

Erfindungsgemäß kann es ebenfalls vorteilhaft sein, wenn der Ringkragen oval geformt ist, wobei sein größter Außendurchmesser im Bereich der Betätigungsabschnitte und des Ringkragens, und sein kleinster Durchmesser im Bereich der Rastnocken ausgebildet sind, und der größte Außendurchmesser größer ist als der Außendurchmesser der kreisförmigen Umfangskontur des Muffenabschnitts, und sein kleinster Außendurchmesser kleiner ist als der Außendurchmesser des Muffenabschnitts. Hierbei sind die Rastarme an ihren die Rastnocken aufweisenden Enden derart radial nach innen verformt, dass ihr radialer Abstand zur Längsmittelachse kleiner ist als ein Innenradius der Durchgangsöffnung, so dass in der Einraststellung der Rastnocken der Ringkragen eine kreisförmige Umfangskontur aufweist, deren Außendurchmesser kleiner/gleich dem Außendurchmesser des Muffenabschnitts ist.

Weiterhin ist es erfindungsgemäß von Vorteil, wenn die Dicke der Rastarme geringer ist, als die Wandstärke der Adapterhülse, so dass zwischen dem Außenumfang der Wandung der Adapterhülse und den Rastarmen eine radial in Richtung auf die Längsmittelachse verlaufende Stufenfläche ausgebildet ist. Hierbei ist es von Vorteil, wenn die radiale Höhe der Stufenfläche und die Länge der Rastarme innerhalb des Muffenabschnitts derart bemessen sind, dass ein radial nach außen gerichteter Federweg der Rastnocken derart gegeben ist, dass der radiale Abstand der radial nach außen gespreizten Rastnocken mindestens gleich einem Innendurchmesser der Adapterhülse und mindestens gleich dem Außendurchmesser des Steckerschaftes eines Gegensteckverbinders ist.

Weiterhin ist es erfindungsgemäß von Vorteil, wenn die Rastfortsätze jeweils aus einem parallel zur Längsmittelachse verlaufenden, radial elastisch verbiegbaren Arm gebildet sind, wobei ihre Rastfortsätze diametral gegenüberliegend angeordnet und zu den Rastarmen um 90° versetzt sind und an ihren freien in Einsteckrichtung weisenden Enden radial nach außen abstehende Rastnocken aufweisen.

Es ist von Vorteil, wenn die Arme durch einen U-förmigen Schlitz von der Wandung der Adapterhülse getrennt sind und mit der Wandung der Adapterhülse mit ihrem entgegen der Einsteckrichtung weisenden Ende einstückig verbunden sind. Hierdurch kann die Adapterhülse kurz und kompakt ausgebildet werden. Die radiale Elastizität der Arme kann über die Länge und Dicke der Arme eingestellt werden. Weiterhin ist es von Vorteil, wenn die Rastnocken der Arme mit ihren freien Enden auf einem Umfangskreis liegen, dessen Durchmesser kleiner ist als der Außendurchmesser des Muffenabschnitts und größer ist als der Innendurchmesser des Kanalabschnitts des Muffenabschnitts. Hierdurch ragen die Rastnocken der Arme mit ihren Enden nicht über den Außenumfang des Muffenabschnitts heraus, wodurch einerseits eine Beschädigung ihrer Rastnocken verhindert und andererseits die kompakte Bauweise des erfindungsgemäßen Steckverbinders unterstützt wird.

Durch die erfindungsgemäße Ausgestaltung und Anordnung können die Rastarme im Bereich ihrer Rastnocken durch den Steckverbinder beim Einstecken nach außen auseinandergebogen werden, so dass die Rastarme mit dem Ringkragen während des Steckvorgangs derart verformt werden, dass eine Einsteckkontrolle gegeben ist.

Weiterhin ist es erfindungsgemäß von Vorteil, wenn in Einsteckrichtung vor der Adapterhülse in der Durchgangsöffnung des Muffenabschnitts eine Umfangsdichtung angeordnet ist zum Abdichten eines Umfangsspaltes zwischen einer Innenwandung des Muffenabschnitts und dem Steckerschaft eines Gegensteckverbinders.

Ebenfalls ist es von Vorteil, wenn in dem Muffenabschnitt am Übergang des im Durchmesser erweiterten Abschnitts des Muffenabschnitts zum Durchgangskanal eine Ringschulter zur Anlage der Umfangsdichtung ausgebildet ist, und die Umfangsdichtung zwischen der Ringschulter und einer Stirnendfläche der Adapterhülse eingekammert ist. Diese erfindungsgemäße Anordnung ermöglicht es, dass weder im Steckverbinder noch im Gegensteckverbinder Hinterschnitte ausgebildet werden müssen, um eine Kammerung der Umfangsdichtung zu erreichen. Zudem sitzt die Umfangsdichtung im Innern des Muffenabschnitts geschützt.

Erfindungsgemäß kann es weiterhin vorteilhaft sein, dass am Außenumfang des Muffenabschnitts eine Lösesicherung in Richtung der Längsmittelachse zwischen zwei Raststellungen verschiebbar angeordnet ist, wobei die Lösesicherung in ihrer auf den Ringkragen aufgeschobenen Raststellung eine Spreizung der Rastarme verhindert und in ihrer anderen, entgegengesetzt verschobenen Raststellung die Rastarme für eine Spreizung freigibt.

Hierbei ist es erfindungsgemäß von Vorteil, wenn die Lösesicherung aus einer den Muffenabschnitt umfassenden Hülse besteht, die an ihrem in Einsteckrichtung weisenden Umfangsrand Rastzungen aufweist, die in der jeweiligen Raststellung in Ausnehmungen der Umfangswand des Muffenabschnitts einrasten.

Die erfindungsgemäße Lösesicherung zeichnet sich durch eine sehr kompakte platzsparende Bauweise aus, und durch die Ausbildung des Ringkragens als in der Montagestellung ovaler Ringkragen wird sowohl vor der Montage des Gegensteckverbinders als auch während seiner Montage eine Verschiebung der Lösesicherung verhindert.

Weitere vorteilhafte Ausführungen und vorteilhafte Merkmale der erfindungsgemäßen Steckverbindung sind in den Unteransprüchen beansprucht.

Anhand der in den beiliegenden Zeichnungen dargestellten Ausführungsbeispiele wird die Erfindung näher erläutert. Es zeigen:
- Fig. 1: eine perspektivische Explosions-Darstellung einer erfindungsgemäßen Steckverbindung aus einem erfindungsgemäßen Steckverbinder und einem erfindungsgemäßen Gegensteckverbinder mit zwei unterschiedlichen Darstellungen der Verschiebesicherung,
- Fig. 2: eine Frontansicht auf eine erfindungsgemäße Adapterhülse,
- Fig. 3: eine Seitenansicht, zum Teil geschnitten, einer Adapterhülse gemäß Fig. 2,
- Fig. 4: eine perspektivische Frontalansicht auf die Adapterhülse gemäß Fig. 3,
- Fig. 5: eine Schnittdarstellung gemäß dem Schnitt N-N in Fig. 3,
- Fig. 6: eine Schnittdarstellung gemäß dem Schnitt O-O in Fig. 3,
- Fig. 6a: eine Ansicht auf die Adapterhülse gemäß Fig. 3 entsprechend dem Pfeil A in Fig. 1,
- Fig. 7: einen Längsschnitt durch eine erfindungsgemäße Steckverbindung im eingesteckten Zustand der Adapterhülse und vor dem Einstecken des Gegensteckverbinders,
- Fig. 8: eine Schnittdarstellung im Längsschnitt einer erfindungsgemäßen Steckverbindung gemäß Fig. 1 während des Einsteckvorgangs des Gegensteckverbinders,
- Fig. 9: eine Ansicht gemäß dem Pfeil B in Fig. 8,
- Fig. 10: einen Längsschnitt durch eine erfindungsgemäße Steckverbindung gemäß Fig. 1 im eingesteckten Zustand des Gegensteckverbinders,
- Fig. 11: eine Ansicht gemäß Fig. 10 mit einem in die Sicherungsstellung verschobenen Sicherungselement,
- Fig. 12: eine perspektivische Ansicht einer zweiten Ausführungsform einer erfindungsgemäßen Adapterhülse,
- Fig. 13: eine Frontalansicht auf die Adapterhülse gemäß Fig. 12,
- Fig. 14: einen Längsschnitt durch eine erfindungsgemäße Steckverbindung im nicht eingesteckten Zustand des Gegensteckverbinders mit einer Adapterhülse gemäß Fig. 12,
- Fig. 14a: eine Ansicht gemäß Fig. 14, jedoch um 90° gedreht,
- Fig. 15: einen Schnitt entsprechend Fig. 14, jedoch mit einem teilweise eingesteckten Gegensteckverbinder,
- Fig. 16: eine Ansicht gemäß dem Pfeil C in Fig. 15,
- Fig. 17: einen Schnitt durch eine erfindungsgemäße Steckverbindung gemäß Fig. 14 im eingesteckten Zustand des Gegensteckverbinders,
- Fig. 18: eine Ansicht gemäß dem Pfeil D in Fig. 17,
- Fig. 19: eine Ansicht einer alternativen Ausführungsform eines erfindungsgemäßen Steckverbinders, zum Teil geschnitten und
- Fig. 20: eine Vergrößerung als Detailansicht eines Ausschnitts F in Fig. 15.

Gleiche Teile sind in den einzelnen Figuren mit denselben Bezugsziffern gekennzeichnet.

Zu der anschließenden Beschreibung wird ausdrücklich beansprucht, dass die Erfindung nicht auf alle oder mehrere Merkmale von beschriebenen Merkmalskombinationen beschränkt ist, vielmehr kann jedes einzelne Teilmerkmal des Ausführungsbeispiels auch losgelöst von allen anderen im Zusammenhang damit beschriebenen Teilmerkmalen für sich und auch in Kombination mit anderen Merkmalen sowie auch unabhängig von den Merkmalskombinationen und Rückbeziehungen der Ansprüche eine erfinderische Bedeutung in Verbindung mit dem Gegenstand des Anspruchs 1 haben.

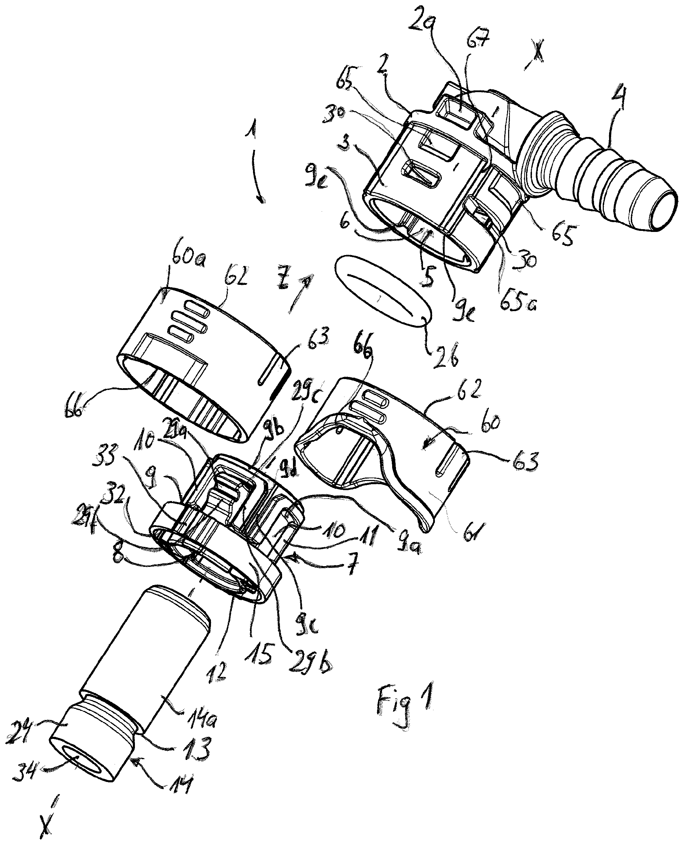

Wie in Fig. 1 dargestellt ist, weist ein erfindungsgemäßer Steckverbinder 1 ein Gehäuse 2 auf, das an seinem Ende einen Muffenabschnitt 3 besitzt. An seinem anderen Ende besitzt das Gehäuse 2 einen Steckabschnitt 4 z. B. zum Aufstecken einer Fluidleitung oder eines Leitungsverbinders. Dieser Steckabschnitt 4 kann aber auch als Aufnahmeabschnitt zum Einstecken einer Fluidleitung z. B. über eine lösbare Steckverbindung ausgebildet sein. Alternativ kann das Gehäuse 2 auch am anderen Ende an ein Aggregat über eine derartige Steckverbindung angeschlossen werden.

Der Steckverbinder 1 kann als Winkelsteckverbinder, wie in Fig. 1 dargestellt, ausgebildet sein. Alternativ kann aber auch der Steckverbinder 1 zwischen dem Muffenabschnitt 3 und dem gegenüberliegenden Ende 4 nicht abgewinkelt sein, so dass er grade ausgebildet ist, oder es können beliebige Winkel zwischen den Abschnitten 1 und 4 vorhanden sein. Ebenfalls ist ein T-förmiger oder Y-förmiger Steckverbinder möglich. Der Steckverbinder 1 kann auch Bestandteil eines Verteilergehäuses sein mit zusätzlichen weiteren Anschlüssen für eine Fluidleitung oder für einen Messanschluss oder dergleichen.

Das Gehäuse 2 weist einen Durchgangskanal 5 auf. Der Durchgangskanal 5 besitzt im Bereich des Muffenabschnitts 3 einen im Durchmesser insbesondere vergrößerten Kanalabschnitt 6.

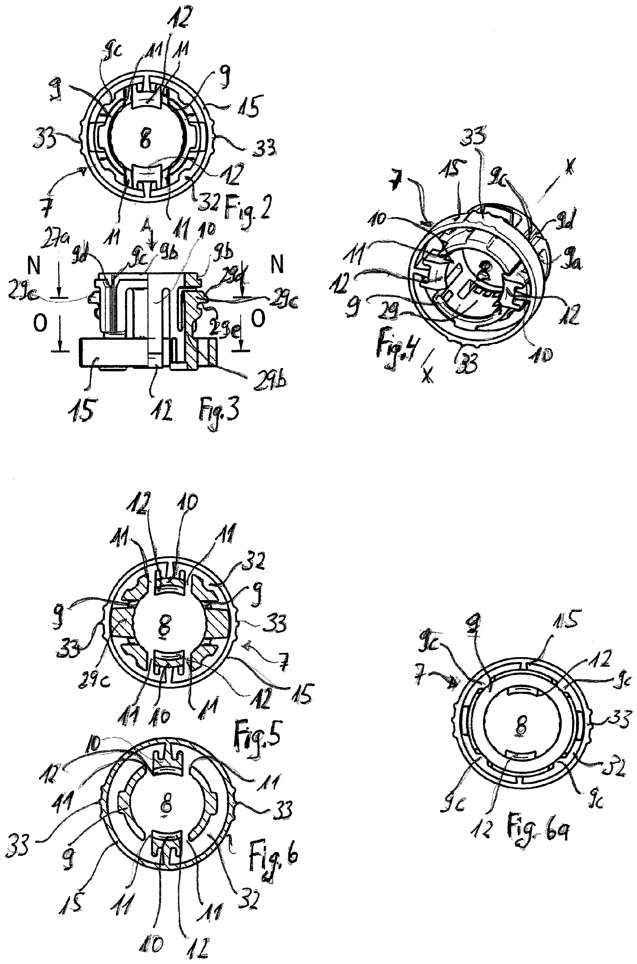

In den Muffenabschnitt 3 mit dem im Durchmesser vergrößerten Kanalabschnitt 6 des Gehäuses 2 wird eine Adapterhülse 7 eingesetzt. Diese Adapterhülse 7 weist eine Durchgangsöffnung 8 auf, siehe Fig. 1 und 2. Weiterhin besitzt die Adapterhülse 7 eine die Durchgangsöffnung 8 umfassende Hülsenwandung 9. Insbesondere in zwei einander diametral gegenüberliegenden Abschnitten sind in der Hülsenwandung 9 Rastmittel ausgebildet. Diese Rastmittel bestehen vorzugsweise aus zwei in Bezug auf eine Längsmittelachse X-X der Adapterhülse 7 radial elastische Rastarme 10, die um 180 ° zueinander versetzt angeordnet sind. Die Rastarme 10 verlaufen z. B. parallel zur Längsmittelachse X-X und sind durch schlitzförmige Freischnitte 11 an ihren Längsseiten von der Hülsenwandung 9 getrennt. An ihrem in Einsteckrichtung Z vorderen Ende der Adapterhülse 7 sind die Rastarme 10 an die Hülsenwandung 9 angebunden. Hierbei besitzen die Rastarme 10 vorzugsweise eine geringere Dicke als die Wandstärke der Hülsenwandung 9, so dass zwischen dem Außenumfang der Hülsenwandung 9 und den Rastarmen 10 eine in Richtung auf die Längsmittelachse X-X verlaufende Stufenfläche 9a ausgebildet ist.

Wie in Fig. 1 weiterhin zu erkennen ist, kann es zweckmäßig sein, wenn am in Einsteckrichtung Z vorderen Ende der Adapterhülse 7 durch eine Durchmesserreduzierung eine Ringstufe 9b ausgebildet ist. Ausgehend von dieser Ringstufe 9b erstrecken sich am Umfang der Adapterhülse 7 parallel zur Längsmittelachse X-X verlaufende Führungsnuten 9c, deren Nutgrund auf demselben Radius um die Längsmittelachse X-X liegt wie der Umfang der Ringstufe 9b. Die Führungsnuten 9c weisen jeweils eine sich trichterförmig in Einsteckrichtung Z erweiternde Einführungsöffnung 9d auf. Die Führungsnuten 9c dienen zur Führung von im Innern des Kanalabschnitts 6 an seiner Innenwand ausgebildeten Führungsrippen 9e beim Einstecken der Adapterhülse 7 in den Kanalabschnitt 6, wobei die Adapterhülse 7 derart ausgerichtet wird, dass die Führungsrippen 9e in die Führungsnuten 9c eingeführt werden. Hierdurch ergibt sich eine lagerichtige Positionierung der Adapterhülse 7 im Kanalabschnitt 6. Vorzugsweise sind vier jeweils um 90 ° zueinander versetzte Führungsnuten 9c ausgebildet.

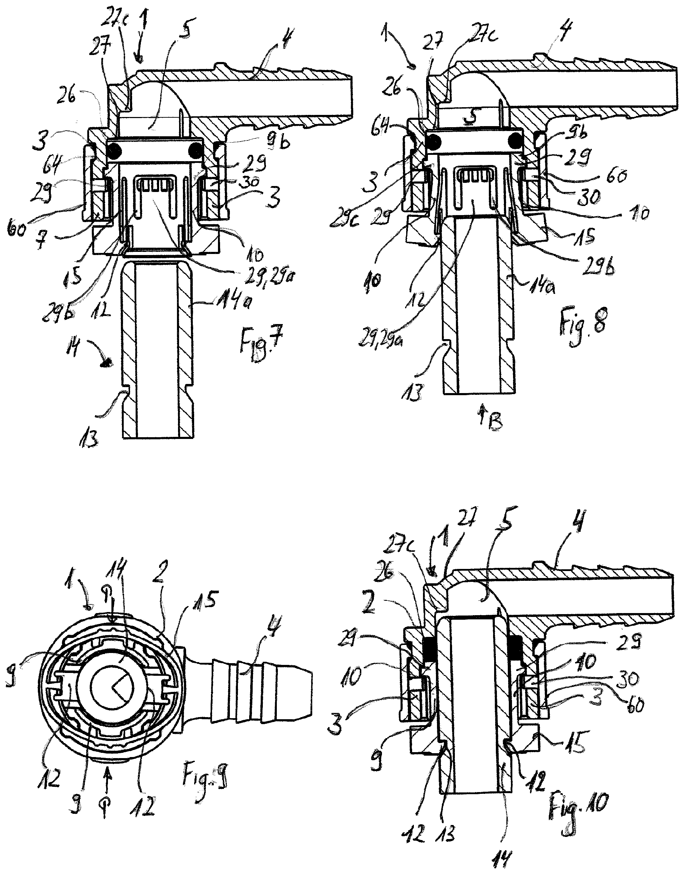

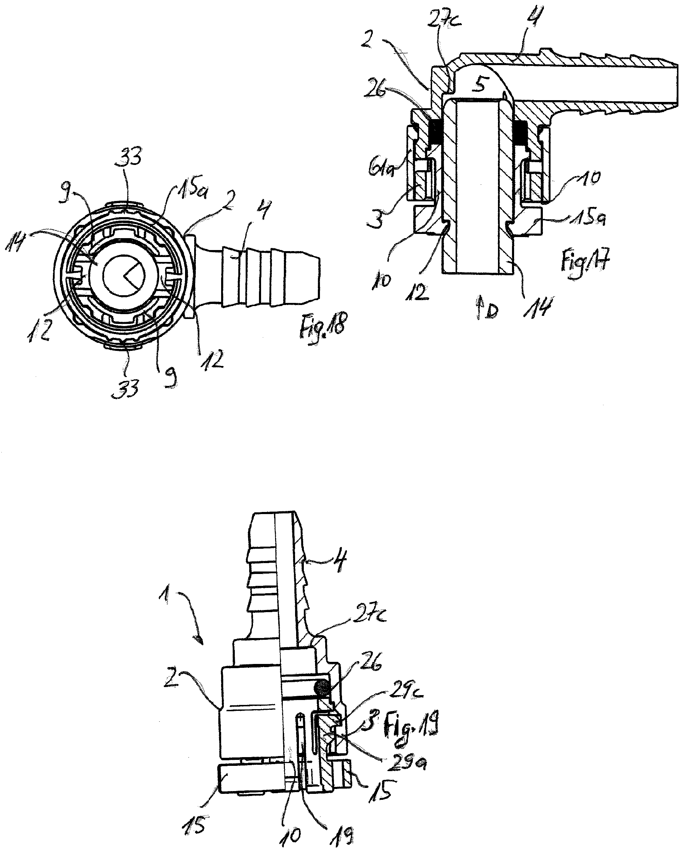

Die Rastarme 10 weisen zum Beispiel an ihren freien Enden radial, in Richtung auf die Längsmittelachse X-X ausgerichtete Rastnocken 12 auf. Diese Rastnocken 12 rasten im in die Durchgangsöffnung 8 eingesteckten Zustand der Adapterhülse 7 in eine Rastnut 13 eines eingesteckten Gegensteckverbinders 14 ein, siehe Fig. 10 und 17. Diese Rastnocken 12 liegen außerhalb des Muffenabschnitts 3 im eingesteckten Zustand der Adapterhülse 7 in den Muffenabschnitt 3. Wie z. B. in Fig. 4, 7 zu erkennen ist, besitzt die Durchgangsöffnung 8 über ihre gesamte Länge denselben Innendurchmesser, so dass eine durchgehende glatte, stufenfreie Innenwandung vorhanden ist, diese geht insbesondere in eine Einführungsschrägfläche im Öffnungsbereich der Durchgangsöffnung 8 im in Einsteckrichtung Z hinten liegenden Öffnungsbereich über.

Weiterhin kann es zweckmäßig sein, wenn die Adapterhülse 7 am Umfang ihrer Durchgangsöffnung 8, d. h. im in Einsteckrichtung Z gesehen hinten liegenden Öffnungsbereich, einen Ringkragen 15 aufweist. Dieser Ringkragen 15 verläuft radial gegenüber der Hülsenwandung 9 nach außen versetzt, so dass sein Außendurchmesser und sein Innendurchmesser insbesondere größer sind als der Außendurchmesser der Hülsenwandung 9. Zweckmäßigerweise ist der Außendurchmesser des Ringkragens 15 gleich groß wie der des Muffenabschnitts 3.

Der Ringkragen 15a ist somit von der Adapterhülse 7 durch umfangsgemäße Spaltabschnitte 32 zwischen den Rastarmen 10 umfangsgemäß getrennt. Im Bereich der Rastnocken 12 der Rastarme 10 ist der Ringkragen 15 mit den Rastarmen 10 an deren Außenseite über Stege verbunden. Demnach umschließt der Ringkragen 15 die Adapterhülse 7 im Bereich der freien Enden der Rastarme 10. Erfindungsgemäß ist es von Vorteil, wenn der Ringkragen 15 mittig zwischen den Rastarmen 10 zwei diametral einander gegenüberliegende Verformungsabschnitte 33 aufweist. Im Bereich dieser Verformungsabschnitte 33 ist der Ringkragen 15 durch eine radial von außen zur Längsmittelachse X-X aufzubringende Kraft P derart radial nach innen verformbar, dass die Rastarme 10 radial nach außen derart gespreizt werden, dass ihre Rastnocken 12 außer Eingriff aus der Rastnut 13 des Steckerschaftes 14a des eingesteckten Gegensteckverbinders 14 kommen, siehe Fig. 8. Durch diese äußere Kraftausübung auf die Verformungsabschnitte 33 nimmt der Ringragen 15 eine ovale Form ein, siehe Fig. 9. Eine derartige Verformung erfolgt auch beim Einstecken des Steckerschaftes 14a des Gegensteckverbinders 14a. Hierdurch ist eine Lösbarkeit des Gegensteckverbinders 14 aus dem Steckverbinder 1 von Hand möglich. Der Außendurchmesser des Ringkragens 15 ist insbesondere gleich groß wie der Außendurchmesser des Muffenabschnitts 3. Zweckmäßigerweise sind die Verformungsabschnitte 33 durch in Bezug auf die Längsmittelachse X-X radial nach außen gerichtete z. B. rippenartige Ausbuchtungen des Ringkragens 15 gebildet. Erfindungsgemäß ist es zweckmäßig, wenn die Rastnocken 12 der Rastarme 10 einen radialen Abstand zur Längsmittelachse X-X aufweisen, der kleiner ist als ein Innenradius der Durchgangsöffnung 8. Weiterhin ist es von Vorteil, wenn ein radialer Abstand der Rastarme 10 in Bezug auf die Längsmittelachse X-X zumindest in einem an ihre Rastnocken 12 angrenzenden Bereich gleich dem Innendurchmesser der Durchgangsöffnung 8 ist.

Gemäß der Erfindung ist die Adapterhülse 7 innerhalb des Muffenabschnitts 3 mittels Formschlusselementen in axialer und vorzugsweise auch umfangsgemäßer Richtung formschlüssig fixiert. Diese Formschlusselemente bestehen aus am Umfang der Adapterhülse 7 zwischen den Rastarmen 10 ausgebildeten, radial elastischen Rastmitteln 29.

Die Rastmittel 29 werden insbesondere aus zwei axial parallel zur Längsmittelachse X-X verlaufenden, radial elastisch biegbaren Armen 29a gebildet. Diese Arme 29a sind jeweils insbesondere um 90 ° zueinander versetzt zu den Rastarmen 10 angeordnet. Die Arme 29a sind durch einen U-förmigen Schlitz 29b von der Wand der Adapterhülse 7 getrennt und mit ihrem entgegen der Einsteckrichtung Z weisenden Ende mit der Wand der Adapterhülse 7 einstückig verbunden, siehe Fig. 7, 8. An ihren freien Enden weisen die Arme 29a Rastnocken 29c auf, die radial nach außen abstehen, und die eine in Einsteckrichtung weisende Schrägfläche 29d besitzen, sowie eine senkrecht zur Längsmittelachse X-X verlaufende Rastfläche 29e, die mit der Schrägfläche 29d an ihrem äußeren freien Ende einen spitzen Winkel einschließt, siehe Fig. 3. Ein Umfangskreis, auf dem die Rastnocken 29c der Arme 29a mit ihren freien Enden liegen, besitzt einen Durchmesser, der größer ist als der Innendurchmesser des Kanalabschnitts 6 des Muffenabschnitts 3 und kleiner als der Außendurchmesser des Kanalabschnitts 6 ist. Es ist zweckmäßig, wenn in Einsteckrichtung gesehen hinter dem jeweiligen Rastnocken 29c der Arme 29a ein Versteifungsansatz 29f angeformt ist. Die Dicke der Arme 29 ist vorzugsweise kleiner als die Dicke der Wand der Adapterhülse 7. Über die Länge und die Dicke der Arme 29a kann die Federelastizität der Arme 29a eingestellt werden.

Die Rastnocken 29c der Arme 29a korrespondieren mit ersten Ausnehmungen 30 in der Umfangswand des Muffenabschnitts 3 derart, dass im eingesteckten Zustand der Adapterhülse 7 in den Muffenabschnitt 3 diese Rastnocken 29c in die ersten Ausnehmungen 30 formschlüssig einrasten. Die ersten Ausnehmungen 30 sind vorteilhafterweise als Durchbrüche der Wandung des Muffenabschnitts 3 ausgebildet. Vorzugsweise sind vier jeweils um 90 ° zueinander versetzt angeordnete erste Ausnehmungen 30 in dem Muffenabschnitt 3 vorhanden. Die Rastnocken 29c der Arme 29a sind insbesondere derart dimensioniert, dass ihre freien Enden im eingerasteten Zustand nicht aus den Durchbrüchen 30 herausragen. Indem vier um 90 ° zueinander versetzte erste Ausnehmungen 30 ausgebildet sind, kann die Adapterhülse 7 in um 90 ° zueinander verdrehte Positionen eingesteckt werden. Es liegt ebenfalls im Rahmen der Erfindung, wenn die Durchbrüche 30 als innere Vertiefungen ausgebildet sind, so dass die Umfangswandung des Muffenabschnitts 3 geschlossen ist. Hierzu kann auf das Ausführungsbeispiel, siehe Fig. 19, verwiesen werden.

Die Rastnocken 29c der Arme 29a rasten mit ihren senkrecht zur Längsmittelachse X-X verlaufenden Rastflächen 29e ein, und die ersten Ausnehmungen 30 weisen den Rastflächen 29e gegenüber liegende Anlageflächen auf, die ebenfalls senkrecht zur Längsmittelachse X-X verlaufen. Diese Ausbildung der gegenüberliegenden Flächen bedingt im eingerasteten Zustand einen Formschluss in axialer Richtung. Zweckmäßigerweise sind die Rastnocken 29c der Arme 29a und die ersten Ausnehmungen 30 derart aneinander angepasst, dass im eingerasteten Zustand eine Verdrehung der Adapterhülse 7 nicht möglich ist.

Die Montage der Adapterhülse 7 erfolgt erfindungsgemäß derart, siehe Fig. 1, dass zunächst eine Umfangsdichtung 26 in den Muffenabschnitt 3 eingesteckt wird. Danach wird die Adapterhülse 7 in den Muffenabschnitt 3 eingeführt, bis ihre Formschlusselemente 28, d. h. die Rastnocken 29c der Arme 29a, in die ersten Ausnehmungen 30 eingerastet sind, siehe Fig. 7. In den derart fertig montierten erfindungsgemäßen Steckverbinder wird der Gegensteckverbinder 14 eingesteckt, siehe Fig. 8. Durch das Einstecken des Steckerschaftes 14a werden die Rastarme 10 gespreizt, siehe Fig. 8, wobei der Ringkragen 15 eine ovale Form einnimmt, siehe Fig. 9, so dass sein Außendurchmesser im Bereich der Betätigungsabschnitte 33 kleiner ist als im Bereich der Rastnocken 12 der Rastarme 10. Der letztere ist dann größer als der Außendurchmesser des Muffenabschnitts 3. Im eingesteckten Zustand des Gegensteckverbinders 14 rasten die Rastnocken 12 der Rastarme 10 in die Rastnut 13 des Gegensteckverbinders 14 formschlüssig ein, siehe Fig. 10, wobei der Ringkragen 15 wieder seine ursprüngliche Kreisform einnimmt.

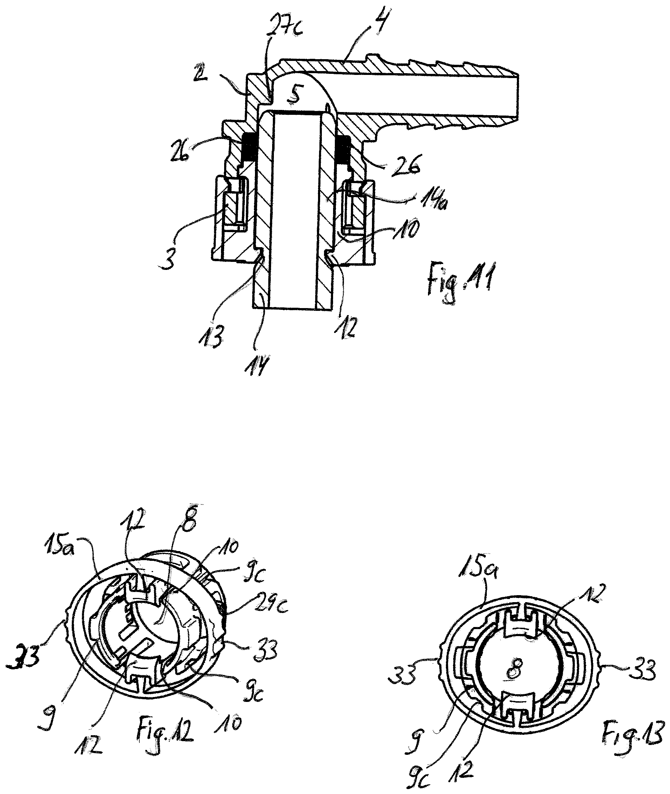

Wie sich aus den Fig. 1 bis 11 ergibt, kann es gemäß der Erfindung zweckmäßig sein, wenn am Außenumfang des Muffenabschnitts 3 eine Lösesicherung 60 in Längsrichtung der Längsachse X-X verschiebbar angeordnet ist. Diese Lösesicherung 60 ist zwischen zwei Stellungen, insbesondere Raststellungen, verschiebbar gelagert. Die erste Stellung ist eine Montagestellung, in der der Gegensteckverbinder 14 in den erfindungsgemäßen Steckverbinder 1, und zwar in die Adapterhülse 7 eingesteckt werden kann, siehe Fig. 7, 8. Die zweite Stellung ist eine Stellung, in der die Lösesicherung 60 in Richtung auf den Ringkragen 15 derart verschoben ist, dass die Lösesicherung 60 eine radiale Spreizung der Rastarme 10 verhindert, siehe Fig. 11.

Vorteilhafterweise besteht gemäß der Erfindung die Lösesicherung 60 aus einer den Muffenabschnitt 3 formschlüssig umfassenden Hülse 61. Diese Hülse 61 ist auf dem Muffenabschnitt 3 verschiebbar gelagert, und zwar zwischen den vorbeschriebenen zwei Stellungen. In der ersten Stellung befindet sich die Hülse 61 vollständig auf dem Muffenabschnitt 3, so dass der Ringkragen 15 frei zugänglich ist und eine Spreizung der Rastarme 10 durch senkrechten Kraft P auf den Ringkragen 15 möglich ist oder die Rastarme 10 beim Einstecken des Gegensteckverbinders 14 gespreizt werden können, siehe Fig. 8. In dieser Stellung rastet z. B. die Hülse 61 mit an ihrem Umfangsrand 62 ausgebildeten Rastzungen 63 mit endseitigen Rastansätzen 64 kraftformschlüssig, d. h. lösbar in einerzweiten Ausnehmung 65 in der Umfangswand des Muffenabschnitts 3 ein. Vorteilhafterweise sind zwei um 180 ° zueinander versetzte Rastzungen 63 und zwei um 90 ° versetzte zweite Ausnehmungen 65 vorhanden. In der zweiten Stellung, insbesondere Raststellung, umfasst die Hülse 61 auch den Ringkragen 15, siehe Fig. 11. Hierdurch ist eine Spreizung der Rastarme 10 nicht mehr möglich, so dass hierdurch ein ungewolltes Lösen der erfindungsgemäßen Steckverbindung, bestehend aus Steckverbinder 1 und Gegensteckverbinder 14 verhindert wird. In dieser zweiten Raststellung rastet die Hülse 61 mit ihren Rastzungen 63 in der Umfangswand des Muffenabschnitts 3 in dort vorhandene dritte Ausnehmungen 65a kraftformschlüssig ein, die mit den ersten Ausnehmungen 30 in dem Muffenabschnitt 3 zusammenfallen können. Zweckmäßigerweise besitzt die Hülse 61 an ihrem Umfang Einbuchtungen 66, die derart ausgebildet sind, dass in der zweiten Stellung die am Ringkragen 15 vorhandenen Ausbuchtungen 33a innerhalb dieser Einbuchtungen 66 liegen, so dass ein Verschieben der Hülse 61 in die zweite Stellung nicht behindert wird. Die Einbuchtungen 66 können, wie in Fig. 1 dargestellt, entweder als axiale Einbuchtungen 66 ausgebildet sein oder aber alternativ als radiale Einbuchtungen der Hülsenwandung, so dass bei dieser Ausführungsform der Lösesicherung 60a die Hülsenwandung außen geschlossen ist und die Ausbuchtungen 33a von den Einbuchtungen 66 umfangsgemäß umfasst werden.

An dem Außenumfang des Muffenabschnitts 3 sind zweckmäßigerweise vier um 90 ° zueinander versetzt angeordnete Längsrippen 67 ausgeformt. Die Hülse 61 besitzt in Anpassung hieran in ihrer Hülsenwandung Führungsnuten 68 zur Aufnahme der Längsrippen 67. Hierdurch erfolgt ein lagerichtiges Aufstecken der Hülse 61 auf den Muffenabschnitt 3, wenn die Adapterhülse 7 noch nicht in den Muffenabschnitt 3 eingesteckt ist, siehe Fig. 1.

Es kann zweckmäßig sein, wenn der Ringkragen eine modifizierte Form besitzt. Hierbei hat der Ringkragen 15a in der nicht gespreizten Stellung der Rastarme 10 eine ovale Form, siehe Fig. 12, 13, so dass der Außendurchmesser des Ringkragens 15a im Bereich der Rastnocken 12 kleiner ist als im Bereich der Betätigungsabschnitte 33.

Somit ist sein größter Außendurchmesser im Bereich der Betätigungsabschnitte 33 und sein kleinster Außendurchmesser im Bereich der Rastnocken 12 ausgebildet, und der größte Außendurchmesser ist größer als der Außendurchmesser der kreisförmigen Umfangskontur des Muffenabschnitts 3, und sein kleinster Außendurchmesser ist kleiner als der Außendurchmesser des Muffenabschnitts 3.

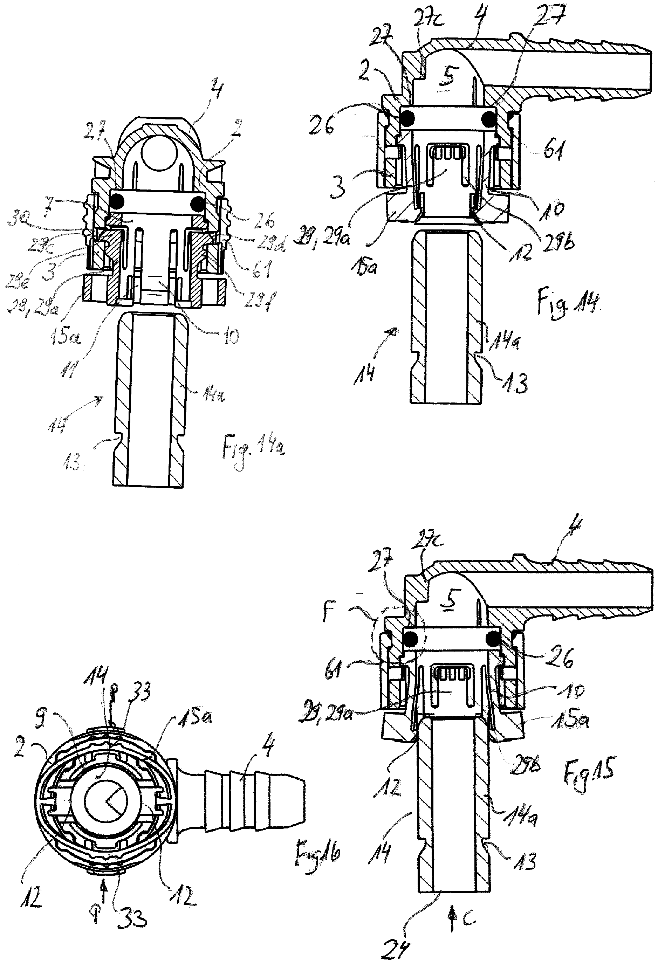

Hierbei ist der Außendurchmesser des Ringkragens 15a größer als der Außendurchmesser des Muffenabschnitts 3 im Bereich der Betätigungsabschnitte 33. Der radiale Abstand der Rastarme 10 im Bereich der Rastnocken 12 ist kleiner als der Innendurchmesser der Durchgangsöffnung 8 im nicht montierten Zustand, siehe Fig. 14, 14a. Hierdurch greifen einerseits im eingesteckten Zustand des Gegensteckverbinders 14 die Rastarme 10 formschlüssig in die Rastnut 13 des Gegensteckverbinders 14 ein, siehe Fig. 17, und andererseits werden beim Einstecken des Gegensteckverbinders 14 mit seinem Steckerschaft 14a die Rastarme 10 derart gespreizt, dass der Ringkragen 15a eine entgegengesetzte ovale Umfangskontur einnimmt, wobei der Außenumfang des Ringkragens 15a gegenüber dem Außenumfang des Muffenabschnitts 3 vorsteht, und zwar im Bereich der Rastnocken 12, siehe Fig. 15, 16. Die Rastarme 10 einschließlich der Rastnocken 12 sind derart in ihrem radialen Abstand bemessen, dass im eingerasteten Zustand in der Rastnut 13 der Ringkragen 15a eine derartige Kreisform besitzt, dass sein Außendurchmesser kleiner/gleich dem Außendurchmesser des Muffenabschnitts 3 ist, siehe Fig. 17, 18. Die Ausbildung des Ringkragens 15a ermöglicht, dass in der nicht montierten Stellung des Gegensteckverbinders 14, siehe Fig. 14a, sowie beim Einstecken des Gegensteckverbinders 14 in die Adapterhülse 7, siehe Fig. 15, die Hülse 61, 61a nicht über den Ringkragen 15a verschiebbar ist, jedoch im eingesteckten Zustand des Gegensteckverbinders 14 über den Ringkragen 15a in ihre zweite Stellung verschiebbar ist, siehe Fig. 17. Somit ermöglicht die ovale Ausbildung des Ringkragens 15a, wie im Vorstehenden beschrieben, eine Zweifachsicherung der erfindungsgemäßen Steckverbindung gegen ungewolltes Verschieben der Hülse 61 und Lösen des Gegensteckverbinders 14 aus dem erfindungsgemäßen Steckverbinder 1.

Ein Anschlussabschnitt 24 des Gegensteckverbinders 14 kann als Anschlusshülse zum Einstecken oder Einschrauben eines Fluidanschlusses oder eines weiteren Verbinderteils ausgebildet sein, siehe Fig. 1. Alternativ kann der Anschlussabschnitt 24 auch als Anschlusszapfen zum Aufstecken einer Fluidleitung hergestellt sein.

Durch den Gegensteckverbinder 14 verläuft ein Fluidkanal 34, der zweckmäßigerweise einen Kanal-Innendurchmesser besitzt, der dem Innendurchmesser des Durchgangskanals 5 des Gehäuses 2 entspricht.

Der Gegensteckverbinder 14 besitzt einen Steckerschaft 14a, der einen kreisförmigen Querschnitt senkrecht zu seiner Mittelachse aufweist. Der Außendurchmesser des Steckerschaftes 14a ist größer als ein radialer Abstand der Rastnocken 12, so dass die Rastarme 10 beim Einstecken des Steckerschaftes 14a radial nach außen verbogen werden, siehe hierzu Fig. 8, 15. An seinem in Einsteckrichtung Z vorderen Ende weist der Steckerschaft 14a die umfänglich verlaufende Rastnut 13 auf. Diese Rastnut 13 besitzt eine in Einsteckrichtung z vordere, senkrecht zur Mittelachse X-X verlaufende Anlagefläche, die mit einer ebenfalls senkrecht zur Längsmittelachse X-X verlaufenden Anlagefläche des Rastnockens 12 derart zusammenwirkt, dass ein Formschluss im eingerasteten Zustand in axialer Richtung gegeben ist, so dass ein selbständiges Lösen des Steckerzapfens bzw. des Steckerschaftes 14a unter Zugbeanspruchung nicht erfolgen kann. An dem dem Steckerschaft 14a gegenüberliegenden Ende des Gegensteckverbinders 14 ist der Anschlussabschnitt 24 zum Anschluss einer Fluidleitung oder eines Aggregats vorgesehen. Zwischen dem Anschlussabschnitt 24 und der Rastnut 13 kann ein Ringbund angeformt sein, der als Anschlag dienen kann. Die Länge des Steckerschaftes 14a ist insbesondere derart bemessen, dass dieser im eingesteckten Zustand in die Adapterhülse 7 mit seinem freien Ende aus der Adapterhülse 7 bis in den Durchgangskanal 5 des Gehäuses 2 hinein verläuft.

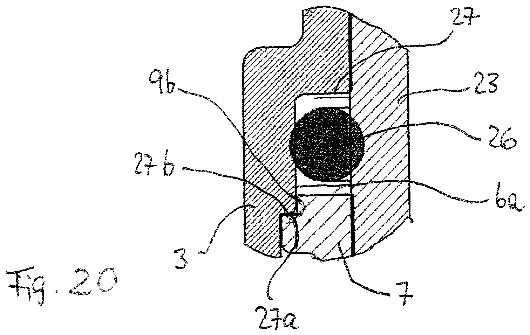

Weiterhin ist erfindungsgemäß zweckmäßigerweise vorgesehen, siehe Fig. 20, dass innerhalb des Muffenabschnitts 3 die Umfangsdichtung 26 in Einsteckrichtung Z vor der Adapterhülse 7 angeordnet ist. Diese Umfangsdichtung 26 dichtet den Umfangsspalt zwischen dem Steckerschaft 14a in dessen eingestecktem Zustand und ist zwischen einer Ringschulter 27 am Übergang des Muffenabschnitts 3 und einer Stirnendfläche 6a der Adapterhülse 7 eingekammert. Auf Grund dieser erfindungsgemäßen Ausgestaltung entfällt die Ausbildung einer Aufnahmenut für die Umfangsdichtung 26, so dass fertigungstechnisch die Ausbildung von Hinterschnitten nicht erforderlich ist. Darüber hinaus ist die Umfangsdichtung 26 im montierten Zustand der Adapterhülse 7 im Innern des Muffenabschnitts 3 geschützt angeordnet. Der Innendurchmesser des Durchgangskanals 5 des Gehäuses 2 und der Innendurchmesser der Durchgangsöffnung 8 der Adapterhülse 7 sind an den Außendurchmesser des Steckerschaftes 14a des Gegensteckverbinders 14 angepasst. Zweckmäßigerweise sind der Innendurchmesser des Durchgangskanals 5 und der Durchgangsöffnung 8 gleich groß. Durch eine elastische Verformung des Dichtrings 26, die durch das Einstecken des Steckerschaftes 14a verursacht wird, erfolgt einerseits eine Abdichtung nach außen und andererseits eine Fixierung des Steckerschaftes 14a in der Adapterhülse 7 bzw. im Muffenabschnitt 3 durch die innerhalb der O-Dichtung erzeugten Verformungsspannung. Die Ringstufe 9b der Adapterhülse 7 besitzt eine radial zur Längsmittelachse X-X verlaufende, umlaufende Anlagefläche 27a. Wie in Fig. 20 dargestellt ist, besitzt insbesondere der Kanalabschnitt 6 eine im Sinne einer Durchmesservergrößerung ausgebildete ringförmige Anschlagfläche 27b, die derart angeordnet ist, dass die Umfangsdichtung 26 zwischen der Ringschulter 27 und der Anschlagfläche 27b verläuft. Im eingesteckten Zustand liegt die Adapterhülse 7 mit ihrer Anlagefläche 27a an der Anschlagfläche 27b an, und die Adapterhülse 7 ragt mit ihrer Ringstufe 9b in den Abschnitt 6a des Kanalabschnitts 6 hinein, der von der Umfangsdichtung 6 abgedichtet wird.

Durch die vorstehende Ausbildung erfolgt ein geometrischer Abschluss der Aufnahme für die Umfangsdichtung 26, eine Begrenzung des Übersteckweges bei der Montage der Adapterhülse 7, eine Aufnahme bzw. Weiterleitung der Aufdornkraft, sowie eine Aufrechterhaltung eines Spaltmaßes zwischen dem Muffenabschnitt 3 des Gehäuses 2 und der Adapterhülse 7.

Weiterhin ist es erfindungsgemäß von Vorteil, wenn im Inneren der Durchgangsbohrung 6 in Einsteckrichtung hinter der Ringschulter 27 im Sinne einer Durchmesserverringerung eine radial gerichtete Anschlagfläche 27c ausgebildet ist, wodurch ein Tiefenanschlag gegeben ist, siehe Fig. 7, 8.

Wie in den Fig. 8, 9 und 15, 16 dargestellt ist, steht der Ringkragen 15, 15a mit seinen mit den Rastarmen 10 verbundenen Abschnitten radial nach außen vor, wenn der Gegensteckverbinder 14 noch nicht vollständig eingesteckt ist, so dass der Ringkragen 15, 15a eine ovale Form einnimmt. Hierdurch ist eine optische Kontrolle gegeben, ob die Einraststellung erreicht ist oder nicht. Denn in der Einraststellung schließt der Ringkragen 15 mit seinem äußeren Umfang mit dem äußeren Umfang des Muffenabschnitts 3 umfangsgemäß bündig ab, wobei dann der Ringkragen 15, 15a eine kreisförmige Umfangskontur besitzt.

In Fig. 19 ist eine Ausführung des Steckverbinders 1 dargestellt, die eine zerspante Herstellung aus Metall zeigt. Hierbei sind die ersten Ausnehmungen 30 nicht als Durchbrüche dargestellt, sondern bilden eine umlaufende Kante, die eine axiale Fixierung der Adapterhülse 7 bewirkt. Jedoch ist eine Verdrehung der Adapterhülse 7 möglich.

Weiterhin ist es erfindungsgemäß vorteilhaft, wenn die radiale Höhe der Stufenfläche 9a und die Länge der Rastarme 10 innerhalb des Muffenabschnitts 3 derart dimensioniert sind, dass der radiale Abstand ihrer Rastnocken 12 kleiner als der Innendurchmesser der Adapterhülse 7 und kleiner als der Außendurchmesser des Steckerschaftes 14a des Gegensteckverbinders 14 ist.

Die vorliegende Erfindung betrifft ebenfalls eine Steckkupplung, bestehend aus einem Steckverbinder 1 und einem Gegensteckverbinder 14, wie im Vorstehenden beschrieben.

Weiterhin ist, wie in Fig. 1 zu erkennen ist, es erfindungsgemäß zweckmäßig, wenn am Übergang des Muffenabschnitts 3 zum übrigen Steckverbindergehäuse 2 zwei diametral gegenüberliegende Aufnahmetaschen 2a ausgebildet sind. Diese Aufnahmetaschen 2a dienen zur Aufnahme von Greifvorrichtungen für die Montage des erfindungsgemäßen Steckverbinders 1.

### Bezugszeichenliste

- 1: Steckverbinder
- 2: Gehäuse
- 2a: Aufnahmetaschen
- 3: Muffenabschnitt
- 4: Steckabschnitt
- 5: Durchgangskanal
- 6: Kanalabschnitt
- 6a: Abschnitt des Kanalabschnitts
- 7: Adapterhülse
- 8: Durchgangsöffnung
- 9: Hülsenwandung
- 9b: Ringstufe
- 9c: Führungsnuten
- 9d: Einführungsöffnung
- 9e: Führungsrippen
- 10: Rastarme
- 11: Freischnitte
- 12: Rastnocken
- 13: Rastnut
- 14: Gegensteckverbinder
- 14a: Steckerschaft
- 15: Ringkragen
- 15a: Ringkragen
- 23: Steckerschaft
- 24: Anschlussabschnitt
- 26: Umfangsdichtung
- 27: Ringschulter
- 27a: Anlagefläche
- 27b: Anschlagfläche
- 27c: radial gestreckte Anschlagfläche
- 29: Rastmittel
- 29a: Rastarme
- 29b: U-förmiger Schlitz
- 29c: Rastnocken
- 29d: Schrägflächen
- 29e: Rastfläche
- 29f: Versteifungsansatz
- 30: Ausnehmungen
- 32: Spalt
- 33: Verformungsabschnitte
- 33a: Ausbuchtungen
- 34: Fluidkanal
- 35: Rastnut des Gegensteckverbinders
- 60: Lösesicherung
- 60a: Lösesicherung
- 61: Hülse
- 61a: Hülse
- 62: Umfangsrand
- 63: Rastzungen
- 64: Rastansätze
- 65: Ausnehmungen
- 65a: Ausnehmungen
- 66: Einbuchtungen
- 67: Längsrippen
- 68: Führungsnuten
- Z: Einsteckrichtung
- X-X: Längsmittelachse
- Y-Y: Längsmittelachse

## Patentansprüche

1. Steckverbinder (1) zum Verbinden von mindestens einer Fluidleitung mit einer anderen Fluidleitung oder einem Aggregatanschluss, umfassend ein Gehäuse (2) mit einem Durchgangskanal (5), wobei ein Ende des Gehäuses (2) als Muffenabschnitt (3) zum Einstecken eines Gegensteckverbinders (14) ausgebildet ist und Rastmittel (10, 12) zum lösbaren Fixieren des Gegensteckverbinders (14) aufweist, wobei die Rastmittel (10, 12) Bestandteil einer in den Muffenabschnitt (3) steckbaren Adapterhülse (7) sind, die im Muffenabschnitt (3) mittels radial elastischer Formschlusselemente (29) gehalten ist, und eine Durchgangsöffnung (8) für einen Steckerschaft (23) des Gegensteckverbinders (14) aufweist, sowie die Rastmittel (10, 12) aus mindestens zwei in Bezug auf eine Längsmittelachse (X-X) des Steckverbinders (1) radial elastischen Rastarmen (10) gebildet sind, und am Umfang der Adapterhülse (7) durch schlitzförmige Freischnitte (11) in deren Hülsenwandung ausgebildet sind, und diese Rastarme (10) an ihrem freien Ende radial in Richtung auf die Längsmittelachse (X-X) verlaufende Rastnocken (12) aufweisen, wobei die Formschlusselemente (29) aus am äußeren Umfang der Adapterhülse (7) zwischen den Rastarmen (10) ausgebildeten, radial elastischen Rastfortsätzen bestehen, die im eingesteckten Zustand in erste Ausnehmungen (30) in der Umfangswand des Muffenabschnitts (3) formschlüssig rastend eingreifen,
**dadurch gekennzeichnet, dass** die Rastnocken (12) der Rastarme (10) einen radialen Abstand zur Längsmittelachse (X-X) aufweisen, der kleiner ist als ein Innenradius der Durchgangsöffnung (8) sowie ein radialer Abstand der Rastarme (10) in Bezug auf die Längsmittelachse (X-X) zumindest in einem an ihre Rastnocken (12) angrenzenden Bereich gleich dem Innendurchmesser der Durchgangsöffnung (8) oder kleiner als der Innendurchmesser der Durchgangsöffnung (8) ist, so dass die Rastnocken (12) der Rastarme (10) im eingesteckten Zustand des Gegensteckverbinders in eine Rastnut (13) des Steckerschaftes (23) des Gegensteckverbinders (14) eingreifen können.

2. Steckkupplung, bestehend aus einem Gegensteckverbinder (14) und einem Steckverbinder (1) nach Anspruch 1 zum Verbinden von mindestens einer Fluidleitung mit einer anderen Fluidleitung oder einem Aggregatanschluss, **dadurch gekennzeichnet, dass** der Gegensteckverbinder (14) eine im Bereich des Steckerschaftes (23) ausgebildete Rastnut (13) aufweist, in die die Rastnocken (12) der Rastarme (10) im eingesteckten Zustand des Gegensteckverbinders (14) eingreifen.

3. Steckkupplung nach Anspruch 2,
**dadurch gekennzeichnet, dass** die Formschlusselemente (29) in Umfangsrichtung der Adapterhülse (7) formschlüssig in den ersten Ausnehmungen (30) fixiert sind, wobei insbesondere vier um 90° zueinander versetzte erste Ausnehmungen (30) ausgebildet sind.

4. Steckkupplung nach Anspruch 2 oder 3,
**dadurch gekennzeichnet, dass** die Adapterhülse (7) einen am Umfang ihrer Durchgangsöffnung (8) an ihrem in Einsteckrichtung (Z) gesehen hinteren Öffnungsrand verlaufenden Ringkragen (15, 15a) aufweist, der im eingesteckten Zustand der Adapterhülse (7) außerhalb des Muffenabschnitts (3) angeordnet ist, und die Rastnocken (12) der Rastarme (10) ebenfalls außerhalb des Muffenabschnitts (3) verlaufen.

5. Steckkupplung nach Anspruch 4,
**dadurch gekennzeichnet, dass** der Ringkragen (15a) mittig zwischen den Rastarmen (10) Verformungsabschnitte (33) aufweist, die unter einer radial zur Längsmittelachse (X-X) gerichteten Kraft derart verformbar sind, dass eine radial nach außen gerichtete Spreizung der Rastarme (10) derart erzeugt wird, dass der radiale Abstand ihrer Rastnocken (12) von der Längsmittelachse (X-X) gleich dem Innenradius der Durchgangsöffnung (8) ist.

6. Steckkupplung nach Anspruch 4 oder 5,
**dadurch gekennzeichnet, dass** der Ringkragen (15) kreisförmig ist und sein Außendurchmesser gleich groß ist wie ein Außendurchmesser einer kreisförmigen Umfangskontur des Muffenabschnitts (3).

7. Steckkupplung nach Anspruch 5,
**dadurch gekennzeichnet, dass** der Ringkragen (15a) oval derart geformt ist, dass sein größter Außendurchmesser im Bereich der Verformungsabschnitte (33) und sein kleinster Außendurchmesser im Bereich der Rastnocken (12) der Rastarme (10) ausgebildet ist und der größte Außendurchmesser größer ist als der Außendurchmesser einer kreisförmigen Umfangskontur des Muffenabschnitts (3) und sein kleinster Außendurchmesser kleiner ist als der Außendurchmesser des Muffenabschnitts (3), wobei die Rastarme (10) an ihren die Rastnocken (12) aufweisenden freien Ende derart radial nach innen verlaufend sind, dass ihr radialer Abstand kleiner ist als der Innendurchmesser der Durchgangsöffnung (8), so dass in der Einraststellung ihrer Rastnocken (12) der Ringkragen (15a) eine kreisförmige Umfangskontur aufweist, deren Außendurchmesser kleiner/gleich dem Außendurchmesser des Muffenabschnitts (3) ist.

8. Steckkupplung nach einem der Ansprüche 1 bis 7,
**dadurch gekennzeichnet, dass** die Dicke der Rastarme (10) geringer ist als die Wandstärke der Adapterhülse (7), so dass zwischen dem Außenumfang der Wandung der Adapterhülse (7) und den Rastarmen (10) eine radial in Richtung auf die Längsmittelachse (X-X) verlaufende Stufenfläche (9a) ausgebildet ist.

9. Steckkupplung nach Anspruch 8,
**dadurch gekennzeichnet, dass** die radiale Höhe der Stufenfläche (9a) und die Länge der Rastarme (10) innerhalb des Muffenabschnitts (3) derart bemessen sind, dass ein radial nach außen gerichteter Federweg der Rastnocken (12) der Rastarme (10) derart gegeben ist, dass der radiale Abstand ihrer radial nach außen gespreizten Rastnocken (12) zur Längsmittelachse (X-X) zumindest gleich dem Innenradius der Durchgangsöffnung (8) der Adapterhülse (7) und zumindest gleich dem Außenradius des Steckerschaftes (14a) des Gegensteckverbinders (14) ist.

10. Steckkupplung nach einem der Ansprüche 2 bis 9,
**dadurch gekennzeichnet, dass** die Rastfortsätze aus jeweils parallel zur Längsmittelachse (X-X) verlaufenden, radial elastisch verbiegbaren Armen (29a) gebildet sind, die diametral gegenüber liegen und zu den Rastarmen (10) um 90 ° versetzt sind und an ihren freien in Einsteckrichtung (Z) weisenden Enden radial nach außen abstehende Rastnocken (29c) aufweisen.

11. Steckkupplung nach Anspruch 10,
**dadurch gekennzeichnet, dass** die Arme (29a) durch eine U-förmigen Schlitz (29b) von der Wandung der Adapterhülse (7) getrennt sind und mit der Wandung der Adapterhülse (7) mit ihrem entgegen der Einsteckrichtung (Z) weisenden Ende einstückig verbunden sind.

12. Steckkupplung nach Anspruch 10 oder 11,
**dadurch gekennzeichnet, dass** die Rastnocken (29c) der Arme (29a) jeweils eine in Einsteckrichtung (Z) weisende Schrägfläche (29d) und eine entgegen der Einsteckrichtung (Z) weisende, senkrecht zur Längsmittelachse (X-X) verlaufende Rastfläche (29e) aufweisen.

13. Steckkupplung nach einem der Ansprüche 10 bis 12,
**dadurch gekennzeichnet, dass** die Rastnocken (29c) der Arme (29a) mit ihren freien Enden auf einem Umfangskreis liegen, dessen Durchmesser kleiner ist als der Außendurchmesser des Muffenabschnitts (3) und größer ist als der Innendurchmesser des Kanalabschnitts (6) des Muffenabschnitts (3).

14. Steckkupplung nach einem der Ansprüche 10 bis 13,
**dadurch gekennzeichnet, dass** die Dicke der Arme (29a) kleiner ist als die Dicke der Wandung der Adapterhülse (7).

15. Steckkupplung nach einem der Ansprüche 4 bis 14,
**dadurch gekennzeichnet, dass** die Rastarme (10) im Bereich ihrer Rastnocken (12) mit dem Ringkragen (15, 15a) verbunden sind und im übrigen Umfangsbereich durch einen umfangsgemäßen Spaltabschnitt von dem Ringkragen (15, 15a) getrennt sind.

16. Steckkupplung nach einem der Ansprüche 2 bis 15,
**dadurch gekennzeichnet, dass** in Einsteckrichtung (Z) vor der Adapterhülse (7) in der Durchgangsöffnung (8) des Muffenabschnitts (3) eine Umfangsdichtung (26) angeordnet ist, zum Abdichten eines Umfangsspaltes zwischen einer Innenwandung des Muffenabschnitts (3) und dem Steckerschaft (14a) des Gegensteckverbinders (14).

17. Steckkupplung nach Anspruch 16,
**dadurch gekennzeichnet, dass** in dem Muffenabschnitt (3) am Übergang des im Durchmesser erweiterten Abschnitts (6) des Muffenabschnitts (3) zum Durchgangskanal (5) eine Ringschulter (27) zur Anlage der Umfangsdichtung (26) ausgebildet ist, und die Umfangsdichtung (26) zwischen der Ringschulter (27) und einer Stirnendfläche der Adapterhülse (7) eingekammert ist.

18. Steckkupplung nach einem der Ansprüche 2 bis 17,
**dadurch gekennzeichnet, dass** in Einsteckrichtung (Z) am vorderen Ende der Adapterhülse (7) eine Ringstufe (9b) durch eine Durchmesserreduzierung der Adapterhülse (7) ausgebildet ist, und sich ausgehend von dieser Ringstufe am Umfang der Adapterhülse (7) parallel zur Längsmittelachse (X-X) verlaufende Führungsnuten (9c) ausgebildet sind, deren Nutgrund auf demselben Radius liegt, wie der Umfang der Ringstufe (9b), wobei im eingesteckten Zustand der Adapterhülse (7) die Führungsnuten (9c) zur Aufnahme und Führung von Führungsrippen (9e) dienen, die am Inneren des Kanalabschnitts (6) an dessen Innenwand ausgebildet sind.

19. Steckkupplung nach Anspruch 18,
**dadurch gekennzeichnet, dass** die Ringstufe (9b) der Adapterhülse (7) eine radial zur Längsmittelachse (X-X) verlaufende, umlaufende Anlagefläche (27a) aufweist, und der Abschnitt (6a) des Kanalabschnitts (6) eine im Sinne einer Durchmesservergrößerung ausgebildete ringförmige Anschlagfläche (27b) besitzt, wobei im eingesteckten Zustand der Adapterhülse (7) diese mit ihrer Anlagefläche (27a) an der Anschlagfläche (27b) anliegt.

20. Steckkupplung nach einem der Ansprüche 4 bis 19,
**dadurch gekennzeichnet, dass** am Außenumfang des Muffenabschnitts (3) eine Lösesicherung (60) in Längsrichtung (X-X) zwischen zwei Raststellungen verschiebbar angeordnet ist, wobei die Lösesicherung in ihrer auf dem Ringkragen (15) verschobenen zweiten Raststellung eine Spreizung der Rastarme (10) verhindert und in ihrer anderen Raststellung die Rastarme (10) spreizbar sind.

21. Steckkupplung nach Anspruch 20,
**dadurch gekennzeichnet, dass** die Lösesicherung (60) aus einer den Muffenabschnitt (3) umfassenden Hülse (61, 61a) besteht, die an ihrem in Einsteckrichtung (Z) weisenden Umfangsrand (62) Rastzungen (63) aufweist, die in der jeweiligen Raststellung in zweite und dritte Ausnehmungen (65, 65a) der Umfangswand des Muffenabschnitts (3) einrasten.

22. Steckkupplung nach Anspruch 21,
**dadurch gekennzeichnet, dass** die Hülse (61, 61a) in ihrer die Spreizung der Rastarme (10) blockierenden Raststellung den Ringkragen (15, 15a) umfasst.

23. Steckkupplung nach Anspruch 22,
**dadurch gekennzeichnet, dass** die Hülse (61, 61a) Einbuchtungen (66) aufweist, die einen Freiraum für Ausbuchtungen (33a) der Verformungsabschnitte (33) des Ringkragens (15, 15a) bilden.

24. Steckkupplung nach einem der Ansprüche 2 bis 23,
**dadurch gekennzeichnet, dass** die ersten Ausnehmungen (30) in der Umfangswand des Muffenabschnitts (3) als Durchgangsöffnungen oder als umfänglich geschlossene Ausnehmungen ausgebildet sind.

25. Steckkupplung nach einem der Ansprüche 2 bis 24,
**dadurch gekennzeichnet, dass** am Gehäuse (2) im Anschluss an den Muffenabschnitt (3) diametral gegenüberliegende Taschen (2a) zur Aufnahme von Greifwerkzeugen ausgebildet sind.

26. Steckverbinder (1) nach Anspruch 1,
**gekennzeichnet durch** die Merkmale des kennzeichnenden Teils eines oder mehrerer der Ansprüche 3 bis 25.

## Claims

1. Plug-in connector (1) for connecting at least one fluid line to another fluid line or to an apparatus connector, comprising a housing (2) having a passage duct (5), wherein one end of the housing (2) is configured as a ferrule portion (3) for plugging in a mating plug-in connector (14) and has latching means (10, 12) for releasably fixing the mating plug-in connector (14), wherein the latching means (10, 12) are a component part of an adapter sleeve (7) which is able to be plugged into the ferrule portion (3) and is held in the ferrule portion (3) by means of radially elastic form-fit elements (29), and has a passage opening (8) for a plug shank (23) of the mating plug-in connector (14); and also the latching means (10, 12) being formed by at least two latching arms (10) that are radially elastic in terms of a longitudinal central axis (X-X) of the plug-in connector (1) and being configured on the circumference of the adapter sleeve (7) by slotshaped reliefs (11) in the sleeve wall of said adapter sleeve (7), and these latching arms (10) on the free end thereof having latching cams (12) that run radially in the direction towards the longitudinal central axis (X-X); wherein the form-fit elements (29) are composed of radially elastic latching appendages which are configured on the external circumference of the adapter sleeve (7) so as to be between the latching arms (10) and in the plugged-in state engage in a form-fitting and latching manner in first clearances (30) in the circumferential wall of the ferrule portion (3), **characterized in that** the latching cams (12) of the latching arms (10) from the longitudinal central axis (X-X) have a radial spacing that is smaller than an internal radius of the passage opening (8), and also a radial spacing of the latching arms (10) in relation to the longitudinal central axis (X-X), at least in a region adjacent to the latching cams (12) of said latching arms (10), is equal to the internal diameter of the passage opening (8) or smaller than the internal diameter of the passage opening (8), so that the latching cams (12) of the latching arms (10) in the plugged-in state of the mating plug-in connector can engage in a latching groove (13) of the plug shank (23) of the mating plug-in connector (14).

2. Plug-in coupling, composed of a mating plug-in connector (14) and a plug-in connector (1) according to Claim 1, for connecting at least one fluid line to another fluid line or to an apparatus connector, **characterized in that** the mating plug-in connector (14) has a latching groove (13) which is configured in the region of the plug shank (23) and in which the latching cams (12) of the latching arms (10) engage in the plugged-in state of the mating plug-in connector (14).

3. Plug-in coupling according to Claim 2,
**characterized in that** the form-fit elements (29) in the circumferential direction of the adapter sleeve (7) are fixed in a form-fitting manner in the first clearances (30), wherein four first clearances (30) mutually offset by 90° are configured in particular.

4. Plug-in coupling according to Claim 2 or 3,
**characterized in that** the adapter sleeve (7) has an annular collar (15, 15a) which, when viewed in the plug-in direction (Z), on the circumference of the passage opening (8) of said adapter sleeve (7) runs on the rear opening periphery and which in the plugged-in state of the adapter sleeve (7) is disposed outside the ferrule portion (3), the latching cams (12) of the latching arms (10) likewise running outside the ferrule portion (3).

5. Plug-in coupling according to Claim 4,
**characterized in that** the annular collar (15a) has deformation portions (33) which are centric between the latching arms (10) and, under the effect of force directed radially towards the longitudinal central axis (X-X), are deformable in such a manner that an expansion of the latching arms (10) directed radially outwards is generated in such a manner that the radial spacing of the latching cams (12) of said latching arms (10) from the longitudinal central axis (X-X) is equal to the internal radius of the passage opening (8).

6. Plug-in connector according to Claim 4 or 5,
**characterized in that** the annular collar (15) is circular and the external diameter thereof is equal in size to an external diameter of a circular circumferential contour of the ferrule portion (3).

7. Plug-in connector according to Claim 5,
**characterized in that** the annular collar (15a) is oval and shaped in such a manner that the largest external diameter thereof is configured in the region of the deformation portions (33), and the smallest external diameter thereof is configured in the region of the latching cams (12) of the latching arms (10), and the largest external diameter is larger than the external diameter of a circular circumferential contour of the ferrule portion (3), and the smallest external diameter thereof is smaller than the external diameter of the ferrule portion (3), wherein the latching arms (10) on the free ends thereof having the latching cams (12) run radially inwards in such a manner that the radial spacing of said latching arms (10) is smaller than the internal diameter of the passage opening (8), so that the annular collar (15a) in the latching position of the latching cams (12) of said latching arms (10) has a circular circumferential contour, the external diameter of the latter being smaller than/equal to the external diameter of the ferrule portion (3).

8. Plug-in coupling according to one of Claims 1 to 7,
**characterized in that** the thickness of the latching arms (10) is less than the wall thickness of the adapter sleeve (7), so that a stepped surface (9a) that runs radially towards the longitudinal central axis (X-X) is configured between the external circumference of the wall of the adapter sleeve (7) and the latching arms (10).

9. Plug-in coupling according to Claim 8,
**characterized in that** the radial height of the stepped surface (9a) and the length of the latching arms (10) within the ferrule portion (3) are sized in such a manner that a spring travel of the latching cams (12) of the latching arms (10) that is directed radially outwards is provided in such a manner that the radial spacing of the radially outwardly expanded latching cams (12) of said latching arms (10) from the longitudinal central axis (X-X) is at least equal to the internal radius of the passage opening (8) of the adapter sleeve (7), and at least equal to the external radius of the plug shank (14a) of the mating plug-in connector (14).

10. Plug-in coupling according to one of Claims 2 to 9,
**characterized in that** the latching appendages are formed from radially elastically flexural arms (29a) which run in each case parallel to the longitudinal central axis (X-X) and are diametrically opposite and offset by 90° in relation to the latching arms (10) and on the free ends of said arms (29a) that point in the plug-in direction (Z) have latching cams (29c) that project radially outwards.

11. Plug-in coupling according to Claim 10,
**characterized in that** the arms (29a) are separated from the wall of the adapter sleeve (7) by way of a U-shaped slot (29b) and by way of the end of said arms (29a) that points counter to the plug-in direction (Z) are integrally connected to the wall of the adapter sleeve (7).

12. Plug-in coupling according to Claim 10 or 11,
**characterized in that** the latching cams (29c) of the arms (29a) each have a ramp (29d) that points in the plug-in direction (Z) and a latching face (29e) that points counter to the plug-in direction (Z) and runs perpendicularly to the longitudinal central axis (X-X) .

13. Plug-in coupling according to one of Claims 10 to 12,
**characterized in that** the latching cams (29c) of the arms (29a) by way of the free ends thereof lie on a circumferential circle of which the diameter is smaller than the external diameter of the ferrule portion (3) and is larger than the internal diameter of the duct portion (6) of the ferrule portion (3).

14. Plug-in coupling according to one of Claims 10 to 13,
**characterized in that** the thickness of the arms (29a) is smaller than the thickness of the wall of the adapter sleeve (7).

15. Plug-in coupling according to one of Claims 4 to 14, **characterized in that** the latching arms (10) in the region of the latching cams (12) thereof are connected to the annular collar (15, 15a) and in the remaining circumferential region are separated from the annular collar (15, 15a) by a gap portion in accordance with the circumference.

16. Plug-in coupling according to one of Claims 2 to 15, **characterized in that** a circumferential seal (26) for sealing a circumferential gap between an internal wall of the ferrule portion (3) and the plug shank (14a) of the mating plug-in connector (14) is disposed in the passage opening (8) of the ferrule portion (3) so as to be in front of the adapter sleeve (7) in the plug-in direction (Z).

17. Plug-in coupling according to Claim 16,
**characterized in that** an annular shoulder (27) for bearing the circumferential seal (26) is configured in the ferrule portion (3) so as to be at the transition of the portion (6) of the ferrule portion (3) that is widened in terms of the diameter to the passage duct (5), and the circumferential seal (26) is encased between the annular shoulder (27) and an end face of the adapter sleeve (7).

18. Plug-in coupling according to one of Claims 2 to 17,
**characterized in that,** when viewed in the plug-in direction (Z), an annular step (9b) at the front end of the adapter sleeve (7) is configured by a reduction of the diameter of the adapter sleeve (7) and, proceeding from this annular step, guide grooves (9c) are configured on the circumference of the adapter sleeve (7) so as to run parallel to the longitudinal central axis (X-X), the groove base of said guide grooves (9c) lying on the same radius as the circumference of the annular step (9b), wherein the guide grooves (9c) in the plugged-in state of the adapter sleeve (7) serve for receiving and guiding guide ribs (9e) which on the interior of the duct portion (6) are configured on the internal wall of the latter.

19. Plug-in coupling according to Claim 18,
**characterized in that** the annular step (9b) of the adapter sleeve (7) has an encircling contact face (27a) that runs radially in relation to the longitudinal central axis (X-X), and the portion (6a) of the duct portion (6) has an annular detent face (27b) that is configured in the context of an enlargement of the diameter, wherein the adapter sleeve (7) in the plugged-in state of said adapter sleeve (7) by way of the contact face (27a) thereof bears on the detent face (27b).

20. Plug-in coupling according to one of Claims 4 to 19,
**characterized in that** a release safeguard (60) is disposed on the external circumference of the ferrule portion (3) so as to be displaceable in the longitudinal direction (X-X) between two latching positions, wherein the release safeguard, in the second latching position thereof displaced on the annular collar (15), prevents any expansion of the latching arms (10), and the latching arms (10) are expandable in the other latching position of said release safeguard.

21. Plug-in coupling according to Claim 20,
**characterized in that** the release safeguard (60) is composed of a sleeve (61, 61a) which comprises the ferrule portion (3) and, on the circumferential periphery (62) of said sleeve (61, 61a) that points in the plug-in direction (Z), has latching tongues (63) which in the respective latching position latch in second and third clearances (65, 65a) of the circumferential wall of the ferrule portion (3).

22. Plug-in coupling according to Claim 21,
**characterized in that** the sleeve (61, 61a) in its latching position that blocks the expansion of the latching arms (10) comprises the annular collar (15, 15a) .

23. Plug-in coupling according to Claim 22,
**characterized in that** the sleeve (61, 61a) has concavities (66) which form a void for convexities (33a) of the deformation portions (33) of the annular collar (15, 15a).

24. Plug-in coupling according to one of Claims 2 to 23,
**characterized in that** the first clearances (30) in the circumferential wall of the ferrule portion (3) are configured as passage openings or as circumferentially closed clearances.

25. Plug-in coupling according to one of Claims 2 to 24,
**characterized in that** diametrically opposite pockets (2a) for receiving gripping tools are configured on the housing (2) so as to adjoin the ferrule portion (3).

26. Plug-in connector (1) according to Claim 1,
**characterized by** the features of the characterizing part of one or a plurality of Claims 3 to 25.

## Revendications

1. Connecteur enfichable (1) servant à la connexion d'au moins une conduite de fluide à une autre conduite de fluide ou à un raccordement d'unité, comportant un boîtier (2) doté d'un canal de passage (5), une extrémité du boîtier (2) étant réalisée sous forme de partie de manchon (3) servant à l'enfichage d'un connecteur enfichable conjugué (14) et présentant des moyens d'encliquetage (10, 12) pour la fixation amovible du connecteur enfichable conjugué (14), les moyens d'encliquetage (10, 12) faisant partie d'une douille d'adaptation (7) pouvant être enfichée dans la partie de manchon (3), laquelle douille d'adaptation est retenue dans la partie de manchon (3) au moyen d'éléments d'engagement par complémentarité de formes (29) radialement élastiques, et présentant une ouverture de passage (8) pour une tige de connecteur (23) du connecteur enfichable conjugué (14), et les moyens d'encliquetage (10, 12) étant formés à partir d'au moins deux bras d'encliquetage (10) radialement élastiques par rapport à un axe médian longitudinal (X-X) du connecteur enfichable (1), et étant formés à la périphérie de la douille d'adaptation (7) par des découpes (11) en forme de fentes dans sa paroi de douille, et ces bras d'encliquetage (10) présentant à leur extrémité libre des cames d'encliquetage (12) s'étendant radialement en direction de l'axe médian longitudinal (X-X), les éléments d'engagement par complémentarité de formes (29) étant constitués de saillies d'encliquetage radialement élastiques, formées à la périphérie extérieure de la douille d'adaptation (7) entre les bras d'encliquetage (10), lesquelles saillies viennent en prise par encliquetage et complémentarité de formes dans des premiers évidements (30) dans la paroi périphérique de la partie de manchon (3) dans l'état enfiché, **caractérisé en ce que** les cames d'encliquetage (12) des bras d'encliquetage (10) sont situées à une distance radiale de l'axe médian longitudinal (X-X), laquelle est inférieure à un rayon intérieur de l'ouverture de passage (8), et une distance radiale des bras d'encliquetage (10) par rapport à l'axe médian longitudinal (X-X) au moins dans une région adjacente à leurs cames d'encliquetage (12) est égale au diamètre intérieur de l'ouverture de passage (8) ou inférieure au diamètre intérieur de l'ouverture de passage (8), de sorte que les cames d'encliquetage (12) des bras d'encliquetage (10), dans l'état enfiché du connecteur enfichable conjugué, puissent venir en prise dans une rainure d'encliquetage (13) de la tige de connecteur (23) du connecteur enfichable conjugué (14).

2. Raccord enfichable, constitué d'un connecteur enfichable conjugué (14) et d'un connecteur enfichable (1) selon la revendication 1 servant à la connexion d'au moins une conduite de fluide à une autre conduite de fluide ou à un raccordement d'unité, **caractérisé en ce que** le connecteur enfichable conjugué (14) présente une rainure d'encliquetage (13) formée dans la région de la tige de connecteur (23), rainure dans laquelle les cames d'encliquetage (12) des bras d'encliquetage (10) viennent en prise dans l'état enfiché du connecteur enfichable conjugué (14).

3. Raccord enfichable selon la revendication 2, **caractérisé en ce que** les éléments d'engagement par complémentarité de formes (29) sont fixés par complémentarité de formes dans les premiers évidements (30) dans la direction périphérique de la douille d'adaptation (7), en particulier quatre premiers évidements (30) décalés les uns par rapport aux autres de 90° étant formés.

4. Raccord enfichable selon la revendication 2 ou 3, **caractérisé en ce que** la douille d'adaptation (7) présente une collerette annulaire (15, 15a) s'étendant à la périphérie de son ouverture de passage (8) au niveau de son bord d'ouverture arrière vu dans le sens d'enfichage (Z), laquelle collerette annulaire est disposée à l'extérieur de la partie de manchon (3) dans l'état enfiché de la douille d'adaptation (7), et les cames d'encliquetage (12) des bras d'encliquetage (10) s'étendent également à l'extérieur de la partie de manchon (3).

5. Raccord enfichable selon la revendication 4, **caractérisé en ce que** la collerette annulaire (15a) présente des parties de déformation (33) centralement entre les bras d'encliquetage (10), lesquelles parties de déformation sont déformables sous l'effet d'une force orientée radialement par rapport à l'axe médian longitudinal (X-X), de telle sorte qu'un écartement, orienté radialement vers l'extérieur, des bras d'encliquetage (10) soit produit de telle sorte que la distance radiale de leurs cames d'encliquetage (12) à l'axe médian longitudinal (X-X) soit égale au diamètre intérieur de l'ouverture de passage (8).

6. Raccord enfichable selon la revendication 4 ou 5, **caractérisé en ce que** la collerette annulaire (15) est circulaire et son diamètre extérieur est égal à un diamètre extérieur d'un contour périphérique circulaire de la partie de manchon (3).

7. Raccord enfichable selon la revendication 5, **caractérisé en ce que** la collerette annulaire (15a) est déformée de manière ovale de telle sorte que son plus grand diamètre extérieur soit réalisé dans la région des parties de déformation (33) et que son plus petit diamètre extérieur soit réalisé dans la région des cames d'encliquetage (12) des bras d'encliquetage (10) et que le plus grand diamètre extérieur soit supérieur au diamètre extérieur d'un contour périphérique circulaire de la partie de manchon (3) et que son plus petit diamètre extérieur soit inférieur au diamètre extérieur de la partie de manchon (3), les bras d'encliquetage (10) s'étendant radialement vers l'intérieur à leurs extrémités libres présentant les cames d'encliquetage (12), de telle sorte que leur distance radiale soit inférieure au diamètre intérieur de l'ouverture de passage (8), de sorte que dans la position d'encliquetage de leurs cames d'encliquetage (12) la collerette annulaire (15a) présente un contour périphérique circulaire dont le diamètre extérieur est inférieur ou égal au diamètre extérieur de la partie de manchon (3).

8. Raccord enfichable selon l'une des revendications 1 à 7,
**caractérisé en ce que** l'épaisseur des bras d'encliquetage (10) est inférieure à l'épaisseur de paroi de la douille d'adaptation (7), de sorte qu'une surface étagée (9a) s'étendant radialement en direction de l'axe médian longitudinal (X-X) soit formée entre la périphérie extérieure de la paroi de la douille d'adaptation (7) et les bras d'encliquetage (10).

9. Raccord enfichable selon la revendication 8,
**caractérisé en ce que** la hauteur radiale de la surface étagée (9a) et la longueur des bras d'encliquetage (10) à l'intérieur de la partie de manchon (3) sont dimensionnées de telle sorte qu'un débattement, orienté radialement vers l'extérieur, des cames d'encliquetage (12) des bras d'encliquetage (10) soit défini de telle sorte que la distance radiale de leurs cames d'encliquetage (12) écartées radialement vers l'extérieur par rapport à l'axe médian longitudinal (X-X) soit au moins égale au diamètre intérieur de l'ouverture de passage (8) de la douille d'adaptation (7) et au moins égale au diamètre extérieur de la tige de connecteur (14a) du connecteur enfichable conjugué (14).

10. Raccord enfichable selon l'une des revendications 2 à 9,
**caractérisé en ce que** les saillies d'encliquetage sont formées à partir de bras (29a) déformables de manière radialement élastique et s'étendant respectivement parallèlement à l'axe médian longitudinal (X-X), lesquels bras sont diamétralement opposés et sont décalés de 90° par rapport aux bras d'encliquetage (10) et présentent à leurs extrémités libres orientées dans le sens d'enfichage (Z) des cames d'encliquetage (29c) faisant saillie radialement vers l'extérieur.

11. Raccord enfichable selon la revendication 10,
**caractérisé en ce que** les bras (29a) sont séparés de la paroi de la douille d'adaptation (7) par une fente (29b) en forme de U et sont connectés d'une seule pièce à la paroi de la douille d'adaptation (7) par leur extrémité orientée en sens inverse du sens d'enfichage (Z).

12. Raccord enfichable selon la revendication 10 ou 11,
**caractérisé en ce que** les cames d'encliquetage (29c) des bras (29a) présentent respectivement une surface inclinée (29d) orientée dans le sens d'enfichage (Z) et une surface d'encliquetage (29e) orientée en sens inverse du sens d'enfichage (Z) et s'étendant perpendiculairement à l'axe médian longitudinal (X-X).

13. Raccord enfichable selon l'une des revendications 10 à 12,
**caractérisé en ce que** les cames d'encliquetage (29c) des bras (29a) se situent par leurs extrémités libres sur un cercle périphérique dont le diamètre est inférieur au diamètre extérieur de la partie de manchon (3) et supérieur au diamètre intérieur de la partie de canal (6) de la partie de manchon (3).

14. Raccord enfichable selon l'une des revendications 10 à 13,
**caractérisé en ce que** l'épaisseur des bras (29a) est inférieure à l'épaisseur de la paroi de la douille d'adaptation (7).

15. Raccord enfichable selon l'une des revendications 4 à 14,
**caractérisé en ce que** les bras d'encliquetage (10) sont, dans la région de leurs cames d'encliquetage (12), connectés à la collerette annulaire (15, 15a) et sont, dans la région périphérique restante, séparés de la collerette annulaire (15, 15a) par une partie d'interstice périphérique.

16. Raccord enfichable selon l'une des revendications 2 à 15,
**caractérisé en ce qu'**un joint périphérique (26) est disposé avant la douille d'adaptation (7) dans le sens d'enfichage (Z) dans l'ouverture de passage (8) de la partie de manchon (3), pour réaliser l'étanchéité d'un interstice périphérique entre une paroi intérieure de la partie de manchon (3) et la tige de connecteur (14a) du connecteur enfichable conjugué (14).

17. Raccord enfichable selon la revendication 16,
**caractérisé en ce qu'**un épaulement annulaire (27) servant à l'appui du joint périphérique (26) est formé dans la partie de manchon (3) à la transition de la partie (6), de diamètre élargi, de la partie de manchon (3) vers le canal de passage (5), et le joint périphérique (26) est encastré entre l'épaulement annulaire (27) et une surface d'extrémité frontale de la douille d'adaptation (7).

18. Raccord enfichable selon l'une des revendications 2 à 17,
**caractérisé en ce qu'**un étage annulaire (9b) est formé par une réduction de diamètre de la douille d'adaptation (7) à l'extrémité avant de la douille d'adaptation (7) dans le sens d'enfichage (Z), et des rainures de guidage (9c) s'étendant à partir de cet étage annulaire à la périphérie de la douille d'adaptation (7) parallèlement à l'axe médian longitudinal (X-X) sont formées, rainures dont le fond de rainure se situe sur le même rayon que la périphérie de l'étage annulaire (9b), les rainures de guidage (9c) servant à la réception et au guidage de nervures de guidage (9e) dans l'état enfiché de la douille d'adaptation (7), lesquelles nervures sont formées sur l'intérieur de la partie de canal (6) sur sa paroi intérieure.

19. Raccord enfichable selon la revendication 18,
**caractérisé en ce que** l'étage annulaire (9b) de la douille d'adaptation (7) présente une surface d'appui (27a) périphérique s'étendant radialement par rapport à l'axe médian longitudinal (X-X), et la partie (6a) de la partie de canal (6) possède une surface de butée annulaire (27b) formée au sens d'une augmentation de diamètre, et dans l'état enfiché de la douille d'adaptation (7), celle-ci s'appuyant par sa surface d'appui (27a) contre la surface de butée (27b).

20. Raccord enfichable selon l'une des revendications 4 à 19,
**caractérisé en ce qu'**une sécurité contre le desserrage (60) est disposée de manière mobile dans la direction longitudinale (X-X) entre deux positions d'encliquetage à la périphérie extérieure de la partie de manchon (3), la sécurité contre le desserrage empêchant un écartement des bras d'encliquetage (10) dans sa deuxième position d'encliquetage déplacée vers la collerette annulaire (15) et, dans son autre position d'encliquetage, les bras d'encliquetage (10) pouvant être écartés.

21. Raccord enfichable selon la revendication 20,
**caractérisé en ce que** la sécurité contre le desserrage (60) est constituée d'une douille (61, 61a) entourant la partie de manchon (3), laquelle douille présente des languettes d'encliquetage (63) au niveau de son bord périphérique (62) orienté dans le sens d'enfichage (Z), lesquelles languettes s'encliquettent dans la position d'encliquetage respective dans des deuxièmes et troisièmes évidement (65, 65a) de la paroi périphérique de la partie de manchon (3).

22. Raccord enfichable selon la revendication 21,
**caractérisé en ce que** la douille (61, 61a) entoure la collerette annulaire (15, 15a) dans sa position d'encliquetage bloquant l'écartement des bras d'encliquetage (10).

23. Raccord enfichable selon la revendication 22,
**caractérisé en ce que** la douille (61, 61a) présente des indentations (66) qui forment un espace libre pour des renflements (33a) des parties de déformation (33) de la collerette annulaire (15, 15a).

24. Raccord enfichable selon l'une des revendications 2 à 23,
**caractérisé en ce que** les premiers évidements (30) dans la paroi périphérique de la partie de manchon (3) sont formés sous forme d'ouvertures de passage ou sous forme d'évidements fermés de manière périphérique.

25. Raccord enfichable selon l'une des revendications 2 à 24,
**caractérisé en ce que** des poches (2a) diamétralement opposées servant à la réception d'outils de préhension sont formées dans le boîtier (2) dans le prolongement de la partie de manchon (3).

26. Raccord enfichable (1) selon la revendication 1,
**caractérisé par** les caractéristiques de la partie caractérisante d'une ou plusieurs des revendications 3 à 25.
